# EUROPÄISCHE PATENTSCHRIFT

(11) **EP 1 006 301 B1**
(45) Veröffentlichungstag und Bekanntmachung des Hinweises auf die Patenterteilung: **12.05.2004**
(21) Anmeldenummer: 99122735.6
(22) Anmeldetag: 16.11.1999
(51) Int. Cl.: F16J 15/32

(54) **Bürstendichtung mit abgewinkelten Borsten**
Brush seal with angled bristles
Joint à brosse avec poils coudés

(30) Priorität: 03.12.1998 DE 19855742
(43) Veröffentlichungstag der Anmeldung: 07.06.2000
(73) Patentinhaber: MTU Aero Engines GmbH, 80995 München (DE)
(72) Erfinder: Gail, Alfons, 86316 Friedberg (DE); Beichl, Stefan, 82211 Herrsching (DE); Klemens, Werner, 80999 München (DE)
(74) Vertreter: Einsele, Rolf W.

(56) Entgegenhaltungen:
- DE-A- 19 618 475
- GB-A- 2 140 674

## Beschreibung

Die Erfindung betrifft eine Bürstendichtung mit abgewinkelten Borsten, zum Abdichten eines Rotors gegen einen Stator umfassend eine Stützplatte mit einem Längsabschnitt und einem dazu abgewinkelten Stützabschnitt und Borsten mit Schaftabschnitten und dazu abgewinkelten Borstenabschnitten, deren Enden gegen die Dichtfläche des Rotors laufen.

Der Einsatz von Bürstendichtungen bei Gasturbinen hat sich gegenüber anderen Dichtungsbauarten, wie z.B. Lippen- oder Labyrinthdichtungen, aufgrund verschiedener Vorteile bewährt.

Aus der DE 196 18 475 A 1 ist eine Bürstendichtung bekannt, deren Borsten zur Verringerung der radialen Baulänge abgewinkelt sind. Um die höhere Steifigkeit der kurzen, abgewinkelten Borstenabschnitte in vertretbaren Grenzen zu halten, ist ein im Bereich der Schaftabschnitte der Borsten liegender Anschlag vorgesehen, der als Biegekante wirkt, wenn die elastischen Borsten infolge einer Exzentrizität des Rotors ausgelenkt werden. Auf diese Weise läßt sich die Steifigkeit der Borsten ohne unzulässig großen, radialen Bauraum einstellen.

Als problematisch hat sich bei derartigen Bürstendichtungen jedoch die auftretende Leckage erwiesen. Diese setzt sich zum einen aus einer Primärleckage durch den Ringspalt zwischen Rotor und dem Borstenpaket und zum anderen aus einer "Bypass-Luftmenge" zusammen, die über den Biegefreiraum zwischen der Stützplatte und dem Borstenpaket strömt.

Die Aufgabe der vorliegenden Erfindung besteht darin, eine Bürstendichtung mit abgewinkelten Borsten so zu verbessern, daß eine möglichst optimale Dichtwirkung erzielt wird, ohne daß der sog. "hang up-Effekt" auftritt, wonach das Borstenpaket bei anliegendem Differenzdruck gegen die Stützplatte gedrückt wird und infolge der Reibungskraft daran haften bleibt.

Die Lösung der Aufgabe ist erfindungsgemäß dadurch gekennzeichnet, daß zwischen den Schaftabschnitten der Borsten und der Stützplatte ein Biegefreiraum vorgesehen ist und zwischen den abgewinkelten Borstenabschnitten und dem Stützabschnitt der Stützplatte über dessen gesamte Länge ein Spalt vorhanden ist, der sich bei anliegendem Differenzdruck schließt.

Der Vorteil besteht darin, daß durch die je nach Differenzdruck wählbare Einstellung des Spaltes der Druck im Biegefreiraum dem Druck vor der Bürstendichtung entspricht. Das bedeutet, daß nahezu der gesamte Druckabfall über das abgwinkelte Borstenpaket bzw. die abgewinkelten Borstenabschnitte erfolgt. Das Borstenpaket wird bei Druckbeaufschlagung nicht in der Weise in eine Zwangslage gebracht, daß es unter großem axialen Druck an den Stützabschnitt gepreßt wird, seine Elastizität verliert und nach einer Auslenkung des Rotors dort haften bleibt. Bei normalem Betrieb unter Druckbeaufschlagung, d.h. konstanten Betriebsbedingungen, legen sich die abgewinkelten Borstenabschnitte wenigstens stellen- bzw. abschnittsweise an dem Stützabschnitt der Stützplatte unter Schließung des Spalts an.

Bevorzugt ist der Spalt so eingestellt, daß in den Schaftabschnitten der Borsten bei anliegendem Differenzdruck keine Druckbelastungen bzw. - spannungen vorliegen. Vielmehr wird der Differenzdruck als Zugkraft in den Schaftabschnitten der Borsten aufgenommen. Auf diese Weise entspricht der Druck im Biegefreiraum dem größeren Druck vor der Bürstendichtung, so daß die Schaftabschnitte der Borsten keine Druckbelastung erfahren und bei einer Änderung des Druckniveaus eine quasi automatische Rückstellwirkung zeigen. Bei einer Druckverringerung drückt der noch kurzzeitig höhere Druck im Biegefreiraum die elastischen Borsten in Richtung auf die Dichtfläche des Rotors, d.h. im allgemeinen radial nach innen. Umgekehrt werden die Schaftabschnitte der elastischen Borsten bei einem Druckanstieg zunächst von der Dichtfläche des Rotors weg angehoben, d.h. im allgemeinen radial nach außen, bis sich ein Druckausgleich einstellt.

Bevorzugt erstreckt sich der Biegefreiraum bis zu einer Endkante des Längsabschnitts der Stützplatte.

Die Lösung der Aufgabe ist alternativ dadurch gekennzeichnet, daß die abgewinkelten Borstenabschnitte in einem Winkel in Richtung des Rotordrehsinns angestellt sind, wobei der Winkel zwischen 0 ° und 70° und höchst bevorzugt zwischen 40 ° und 50 ° beträgt.

Durch das Anstellen der Borsten in Drehrichtung des Rotors wird die Dichtwirkung verbessert, da die durch das Borstenpaket strömende Luft durch die schrägstehenden Borsten umgelenkt wird und damit die bei nicht angestellten Borsten vorkommende sog. "jet-through"-Strömungsform, d.h. Kanalbildung zwischen den Borstenreihen, vermieden wird. Zudem wird bei Auslenkungen des Rotors durch die Torsion der Schaftabschnitte der Borsten eine große Rückstellkraft erzeugt, wodurch das Haften der abgewinkelten Borstenabschnitte an der Stützplatte kaum noch auftritt.

Bevorzugt ist zwischen den Schaftabschnitten der Borsten und der Stützplatte ein Biegefreiraum vorgesehen, so daß die Rückstellwirkung der Borsten bei sich ändernden Drücken und Auslenkungen des Rotors überlagert durch Biegung und Torsion erzeugt wird.

Es kann des weiteren vorteilhaft sein, daß die Schaftabschnitte der Borsten länger als die abgewinkelten Borstenabschnitte sind, damit das Borstenpaket unter Ausnutzung der Rückstellwirkung der elastischen Borsten nicht zu steif wird.

Weitere Ausgestaltungen der Erfindung sind in den Unteransprüchen beschrieben.

Im folgenden wird die Erfindung anhand von Ausführungsbeispielen unter Bezugnahme auf eine Zeichnung näher erläutert. Es zeigt:
- Fig. 1: eine schematische Schnittansicht eines Ausführungsbeispiels der erfindungsgemäßen Bürstendichtung ohne Druckbeaufschlagung,
- Fig. 2: eine schematische Schnittansicht eines weiteren Ausführungsbeispiels der Bürstendichtung unter Druckbeaufschlagung im ausgelenkten Zustand der Borsten infolge eines Druckanstiegs oder einer Rotor-/Gehäuseauslenkung,
- Fig. 3: eine schematische Schnittansicht einer Einbaulage eines weiteren Ausführungsbeispiels der erfindungsgemäßen Bürstendichtung bei einem Rotor mit einer stirnseitigen Dichtfläche,
- Fig. 4: eine schematische Schnittansicht einer alternativen Einbaulage eines weiteren Ausführungsbeispiels der erfindungsgemäßen Bürsgtendichtung bei einem Außen-Rotor,
- Fig.5: eine schematische Schnittansicht eines weiteren alternativen Ausführungsbeispiels der erfindungsgemäßen Bürstendichtung mit in Rotordrehrichtung angestellten Borstenabschnitten und
- Fig. 6: eine schematische Frontansicht im Schnitt des Ausführungsbeispiels der erfindungsgemäßen Bürstendichtung gemäß Fig. 5.

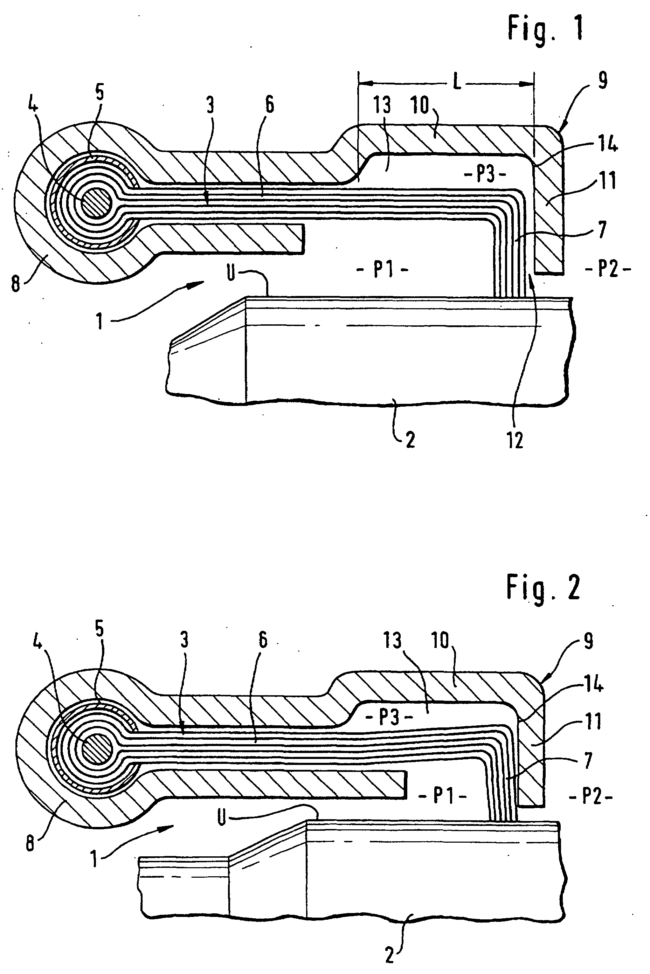

Fig. 1 zeigt ein Ausführungsbeispiel einer im ganzen mit 1 bezeichneten Bürstendichtung, die zwei Räume mit unterschiedlichen Drucken P1, P2 zwischen einem mit seiner Umfangsfläche U angedeuteten, rotationssymmetrischen Rotor 2 und einem nicht dargestellten Stator, z.B. einem Gehäuse, einer Gasturbine, wie z.B. eines Flugtriebwerks, abdichtet. Der Druck P1 ist größer als der Druck P2. Die Bürstendichtung 1 ist in Fig. 1 ohne Druckbeaufschlagung dargestellt. Die freien Enden der Borsten bzw. des Borstenpakets 3 der Bürstendichtung 1 laufen gegen die Umfangsfläche U des Rotors 2. Die Borsten 3 sind um einen Kern 4 gewickelt und in einem Haltering 5 gehalten bzw. positioniert. Die Befestigungsart der Borsten 3 ist vorliegend nicht von Bedeutung und kann auch auf andere Weise erfolgen.

Das Borstenpaket bzw. die Borsten 3 weisen Schaftabschnitte 6 und dazu abgewinkelte Borstenabschnitte 7 auf. In der vorliegenden Einbaulage erstrecken sich die Schaftabschnitte 6 der Borsten 3 in Axialrichtung der Gasturbine. Der Winkel zwischen den Schaftabschnitten 6 und den abgewinkelten Borstenabschnitten 7 beträgt vorliegend etwa 90 °, so daß der abgewinkelte Borstenabschnitt 7 im wesentlichen in einer Radialebene liegt. Der Haltering 5 ist in einem im ganzen mit 8 bezeichneten Gehäuse der Bürstendichtung 1 positioniert. Das Gehäuse 8 umfaßt eine Stützplatte 9 mit einem sich im wesentlichen in Richtung des Schaftabschnitts 6 der Borsten 3 erstreckenden Längsabschnitt 10 und einem dazu abgewinkelten Stützabschnitt 11. Die Form des Gehäuses 8, der Stützplatte 9 sowie einer nicht näher beschriebenen Frontplatte beeinflussen die Funktion der Bürstendichtung 1 und werden je nach Anwendungsfall ausgelegt. Die freien Enden der abgewinkelten Borstenabschnitte 7 stehen über den Stützabschnitt 11 der Stützplatte 9 unter Berührung der Umfangsfläche U des Rotors 2 vor.

Zwischen den Borsten 3 und der Stützplatte 9 ist ein Biegefreiraum 13 vorgesehen. Der Biegefreiraum 13 erstreckt sich bis zu einer den Übergang zwischen dem Längsabschnitt 10 und dem Stützabschnitt 11 der Stützplatte 9 bildenden Endkante 14. Die Schaftabschnitte 6 der Borsten 3 können in den Biegefreiraum 13 ausgelenkt werden, um so die Steifigkeit der verhältnismäßig kurzen, abgewinkelten Borstenabschnitte 7 in vertretbaren Grenzen zu halten und in Abhängigkeit von der Länge L des ablenkbaren Teils der Schaftabschnitte 6 der Borsten 3 einstellen zu können. Die Länge L des Biegefreiraums 13 kann sich beginnend vom Stützabschnitt 11 der Stützplatte 9 durchaus weiter in Richtung des Halterings 5 der Borsten 3 erstrecken als dieses im vorliegenden Ausführungsbeispiel gezeigt ist.

In der noch nicht mit Druck beaufschlagten Bürstendichtung 1 gemäß Fig. 1 ist zwischen den abgewinkelten Borstenabschnitten 7 und dem Stützabschnitt 11 der Stützplatte 9 ein Spalt 12 vorhanden. Die Größe des Spalts 12 wird in Abhängigkeit von der im Betrieb an der Bürstendichtung 1 anliegenden Druckdifferenz so eingestellt, daß gewährleistet ist, daß die Schaftabschnitte 6 der Borsten 3 bei anliegender Druckdifferenz nicht unter Einbringung von Druckspannungen in den Schaftabschnitten 6 in einer Zwangslage gegen den Stützabschnitt 11 bzw. dessen Innenfläche gedrückt werden.

Durch die Einstellung der Größe des Spalts 12 zwischen den abgewinkelten Borstenabschnitten 7 und dem Stützabschnitt 11 der Stützplatte 9 wird der zwischen den Räumen P 1 und P2 anliegende Differenzdruck als Zugkraft in den Schaftabschnitten 6 der Borsten 3 aufgenommen und der Spalt 12 nach Druckbeaufschlagung geschlossen, wobei die Anpreßkraft der abgewinkelten Borstenabschnitte 7 an den Stützabschnitt 11 infolge der Zugbeanspruchung vergleichsweise gering ist. Dieses hat für die Dichtwirkung den Vorteil, daß die daraus resultierende Reibungskraft zwischen den Borsten 3 der Stützplatte 9 ebenfalls gering ist und die Borsten 3 nach seitlichem Ausweichen infolge einer Auslenkung des Rotors 2 nicht an dem Stützabschnitt 11 haften bleiben.

Nach Druckbeaufschlagung stellt sich bei im wesentlichen konstanten Betriebsbedingungen ein Druckgleichgewicht zwischen P1 und P3 ein, so daß dieser nicht dargestellte Zustand jenem in Fig. 1 ohne Druckbeaufschlagung von der Anordnung der einzelnen Elemente her ähnlich ist, jedoch mit dem Unterschied, daß der Spalt 12 zwischen den abgewinkelten Borstenabschnitten 7 und dem Stützabschnitt 11 der Stützplatte 9 durch Anliegen der Borsten geschlossen ist.

Fig. 2 zeigt eine schematische Seitenansicht einer Bürstendichtung, bei der die Borsten 3 infolge eines Druckanstiegs im Raum höheren Druckes P1 oder infolge einer Rotor-/Gehäuseverschiebung ausgelenkt sind. Bei einer optimalen Einstellung des Spaltes 12 zwischen den Borsten 3 und der Stützplatte 9 entspricht der Druck P3 im Biegefreiraum 13 dem Druck P1 im Raum höheren Druckes. Dieses hat nicht nur zur Folge, daß die Schaftabschnitte 6 der Borsten 3 bei anliegender Druckdifferenz ohne Druckbelastung verbleiben, sondern auch daß der Ringspalt zwischen der Umfangsfläche U des Rotors 2 und den freien Enden der Borsten 3, durch den die Primärleckage erfolgt, bei Änderungen der Druckdifferenz automatisch optimal eingestellt wird.

Bei einem in Fig. 2 dargestellten Druckanstieg im Raum höheren Druckes P1 werden die Borsten 3 durch den noch kurzzeitig niedrigeren Druck P3 im Biegefreiraum 13 nach oben, d.h. hier radial nach außen abgelenkt, bis sich ein Druckausgleich einstellt. Im umgekehrten, nicht dargestellten Fall einer Druckverringerung werden die Borsten 3 infolge des noch kurzzeitig höheren Druck P3 im Biegefreiraum 13 nach unten, d.h. radial nach innen unter Verkleinerung des Ringspalts zwischen Rotor 2 und Borsten 3 abgelenkt, bis sich ein Druckausgleich eingestellt hat. Durch die Einstellung des Spalts 12 und die daraus resultierenden Ausgleichsbewegungen infolge der Rückstellwirkung der Borsten 3 bei Änderung der Druckdifferenz tritt lediglich ein vergleichsweise "weiches" Anstreifen der freien Enden der Borsten 3 an der Umfangsfläche U des Rotors 2 auf. Hierdurch lassen sich die Standzeiten der Bürstendichtung 1 mit abgewinkelten Borsten 3 erhöhen und die Dichtwirkung verbessern. Darüber hinaus verhindert die Rückstellwirkung ein Festkleben der Borsten 3 bzw. der abgewinkelten Borstenabschnitte 7 an dem Stützabschnitt 11 der Stützplatte 9 bei hohen Differenzdrücken.

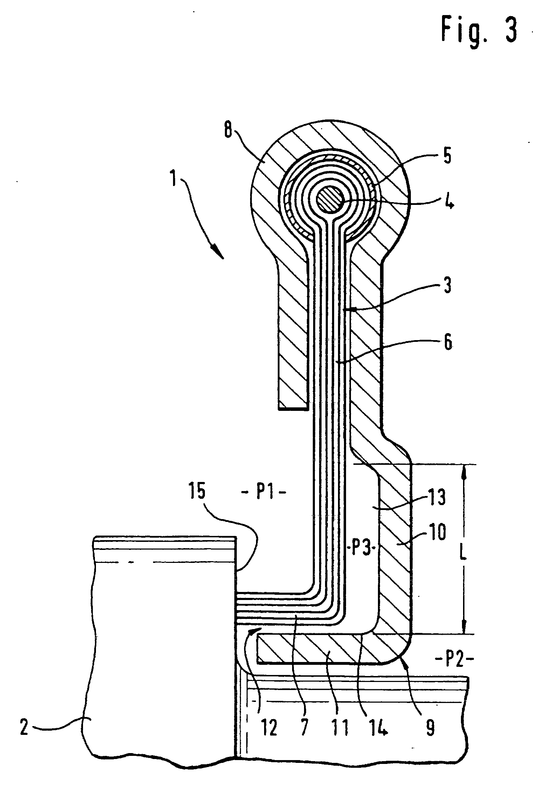

In Fig. 3 ist eine andere Einbaulage einer Bürstendichtung 1 dargestellt, bei der sich der Längsabschnitt 10 der Stützplatte 9 sowie die Schaftabschnitte 6 der Borsten 3 im wesentlichen in einer Radialebene der Gasturbine erstrecken und die freien Enden der abgewinkelten Borstenabschnitte 7 gegen eine radial ausgerichtete, stirnseitige Dichtfläche 15 des Rotors 2 laufen. Der Stützabschnitt 11 der Stützplatte 9 und die abgewinkelten Borstenabschnitte 7 der Borsten 3 verlaufen bei dieser Ausgestaltung im wesentlichen in Axialrichtung der Gasturbine. Die beschriebene Druckausgleichsbewegung der Borsten 3 durch die zuvor eingestellte Größe des Spalts 12 bei einer Änderung der Druckdifferenz zwischen dem Raum höheren Drucks P1 und dem Raum niedrigeren Drucks P2 erfolgt in gleicher Weise.

Die Bürstendichtung 1 mit abgewinkelten Borstenabschnitten 7 läßt sich in all ihren Ausgestaltungen in unterschiedlichen Einbaulagen einsetzen und ist sowohl für stationäre Gasturbinen als auch für Flugtriebwerke geeignet. Aufgrund der sich im allgemeinen im wesentlichen in Radialrichtung erstreckenden, abgewinkelten Borstenabschnitte 7 kann die Bürstendichtung 1 in beiden Drehrichtungen des Rotors 2 betrieben werden.

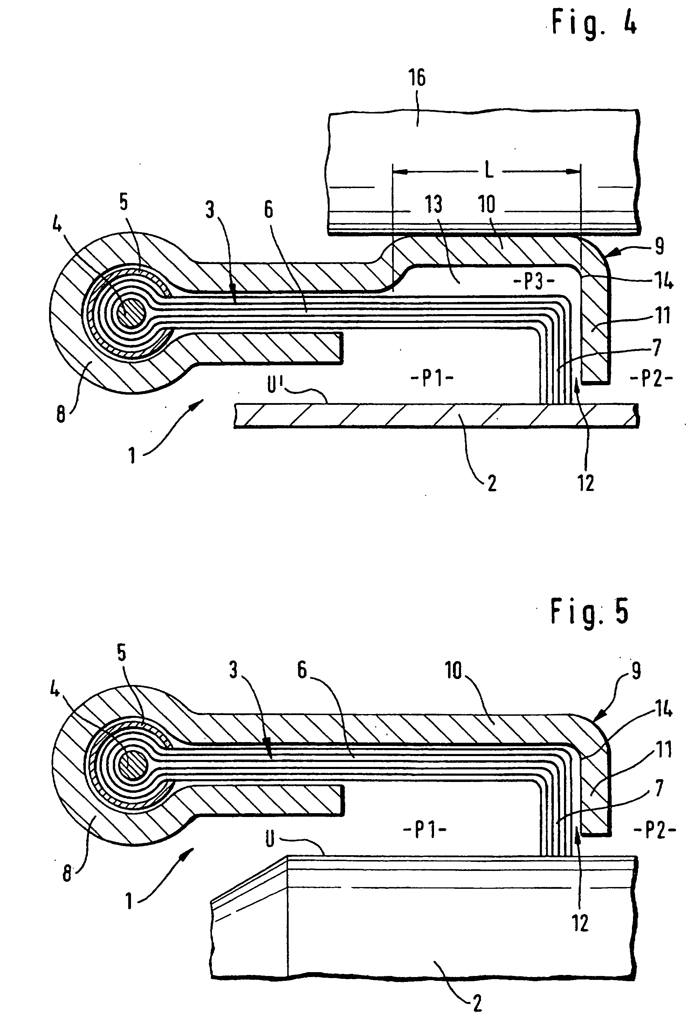

Fig. 4 zeigt eine alternative Einbaulage eines Ausführungsbeispiels der erfindungsgemäßen Bürstendichtung 1, die gegen eine Umfangsfläche U' eines radial außen angeordneten Rotors 2 dichtet, der bspw. bei einer Walze ein zylindrisches Ringbauteil sein kann. In Fig. 4 sind die Verhältnisse ohne Druckbeaufschlagung dargestellt. Die Bürstendichtung 1 ist auf einem innenliegenden Stator 16 angeordnet, so daß sich die abgewinkelten Borstenabschnitte 7 im wesentlichen in Radialrichtung nach außen bzw. - bei einer Anstellung der abgewinkelten Borstenabschnitte 7 im Rotordrehsinn - in einem Winkel zwischen 0 ° und 70 ° zur Radialrichtung erstrecken. Die oben beschriebene Einstellung des Spalts 12 erfolgt hierbei in entsprechender Weise.

Bei dem in Fig. 5 dargestellten Ausführungsbeispiel der erfindungsgemäßen Bürstendichtung 1 sind die abgewinkelten Borstenabschnitte 7 in einem Winkel von etwa 45 ° zur Radialrichtung im Rotordrehsinn angestellt. Bei einer Auslenkung des Rotors 2 werden infolgedessen die Schaftabschnitte 6 der Borsten 3 tordiert, wobei eine sog. Kanalbildung für die durch das Borstenpaket 3 strömende Luft vermieden wird. Gleichzeitig wird infolge der Torsion eine große Rückstellkraft erzeugt, so daß sich die abgewinkelten Borstenabschnitte 7 nach der Auslenkung zurückstellen und nicht an dem Stützabschnitt 11 der Stützplatte 9 haften bleiben. Aufgrund der beschriebenen Effekte läßt sich eine deutliche Verbesserung der Dichtwirkung der Bürstendichtung 1 erzielen.

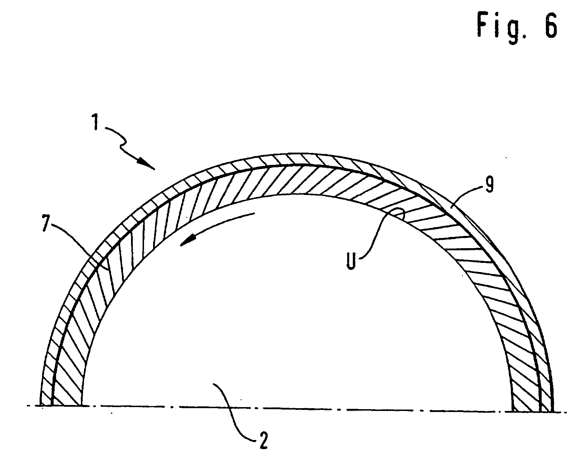

Fig. 6 zeigt eine schematische Frontansicht im Schnitt, in der eine Hälfte der Bürstendichtung 1 gemäß dem Ausführungsbeispiel aus Fig. 5 dargestellt ist. Zur besseren Übersicht ist der Stützabschnitt 11 der Stützplatte 9 weggelassen bzw. lediglich angedeutet. Es ist zu erkennen, daß die abgewinkelten Borstenabschnitte 7 in Richtung des Rotordrehsinns, der mit einem Pfeil gekennzeichnet ist, in einem Winkel von etwa 45 ° angestellt sind. Bei einer Auslenkung des Rotors 2 heben sich die abgewinkelten Borstenabschnitte 7 unter Torsion der Schaftabschnitte 6 an. Durch diese Maßnahme wird die oben beschriebene Kanalbildung vermieden. Zudem stellt sich eine große Rückstellkraft infolge der Torsion ein.

In einem weiteren, nicht dargestellten Ausführungsbeispiel der Bürstendichtung 1 können die abgewinkelten Borstenabschnitte 7 in einem in einem anderen Winkel von 0 ° bis 70 ° gegenüber der Radialrichtung im Rotordrehsinn angestellt sein. Bei einer derartigen Anstellung werden die Schaftabschnitte 6 der Borsten 3 bei radialem Ausweichen der abgewinkelten Borstenabschnitte 7, z.B. infolge einer Auslenkung des Rotors 2, tordiert und entfalten dadurch eine große Rückstellkraft, so daß auch hier die abgewinkelten Borstenabschnitte 7 nicht unter Verschlechterung der Dichtwirkung an dem Stützabschnitt 11 der Stützplatte 9 haften bleiben. Die Ausgestaltung der Bürstendichtung 1 mit angestellten, abgewinkelten Borstenabschnitten 7 kann sowohl mit als auch ohne Biegefreiraum 13 ausgeführt sein. Bei einer Ausführung mit Biegefreiraum 13 tritt mithin bei einer Auslenkung des Rotors 2 eine Überlagerung von Biegung und Torsion der Schaftabschnitte 6 der Borsten 3 auf.

## Patentansprüche

1. Bürstendichtung mit abgewinkelten Borsten, zum Abdichten eines Rotors (2) gegen einen Stator, umfassend eine Stützplatte (9) mit einem Längsabschnitt (10) und einem Stützabschnitt (11) und Borsten (3) mit Schaftabschnitten (6) und dazu abgewinkelten Borstenabschnitten (7), deren Enden gegen die Dichtfläche des Rotors (2) laufen, **dadurch gekennzeichnet, daß** zwischen den Schaftabschnitten (6) der Borsten (3) und der Stützplatte (9) ein Biegefreiraum (13) vorgesehen ist und zwischen den abgewinkelten Borstenabschnitten (7) und dem Stützabschnitt (11) der Stützplatte (9) über dessen gesamten Länge ein Spalt (12) vorhanden ist, der sich bei anliege n-der Druckdifferenz schließt.

2. Bürstendichtung nach Anspruch 1, **dadurch gekennzeichnet, daß** der Spalt (12) so eingestellt ist, daß in den Schaftabschnitten (6) der Borsten (3) bei anliegendem Differenzdruck keine Druckbelastungen vorliegen.

3. Bürstendichtung nach Anspruch 1 oder 2, **dadurch gekennzeichnet, daß** sich der Biegefreiraum (13) bis zur Endkante (14) des Längsabschnitts (10) der Stützplatte (9) erstreckt.

4. Bürstendichtung mit abgewinkelten Borsten, zum Abdichten eines Rotors (2) gegen einen Stator, umfassend eine Stützplatte (9) mit einem Längsabschnitt (10) und einem Stützabschnitt (11) und Borsten (3) mit Schaftab-schnitten (6) und dazu abgewinkelten Borstenabschnitten (7), deren Enden gegen die Dichtfläche des Rotors (2) laufen, **dadurch gekennzeichnet, daß** die abgewinkelten Borstenabschnitte (7) in einem Winkel in Richtung des Rotordrehsinns angestellt sind.

5. Bürstendichtung nach Anspruch 4, **dadurch gekennzeichnet, daß** der Winkel zwischen 0 ° und 70 ° liegt.

6. Bürstendichtung nach Anspruch 4 oder 5, **dadurch gekennzeichnet, daß** zwischen den Schaftabschnitten (6) der Borsten (3) und der Stützplatte (9) ein Biegefreiraum (13) vorgesehen ist.

7. Bürstendichtung nach einem oder mehreren der vorhergehenden Ansprüche, **dadurch gekennzeichnet, daß** die Schaftabschnitte (6) der Borsten (3) länger als die abgewinkelten Borstenabschnitte (7) sind.

8. Bürstendichtung nach einem oder mehreren der vorhergehenden Ansprüche, **dadurch gekennzeichnet, daß** die Borsten (3) mit ihren freien Enden gegen einen innenliegenden Rotor (2) dichten.

9. Bürstendichtung nach einem oder mehreren der Ansprüche 1 bis 7, **dadurch gekennzeichnet, daß** die Borsten (3) mit ihren freien Enden gegen einen außenliegenden Rotor (2) abdichten.

10. Bürstendichtung nach Anspruch 9, **dadurch gekennzeichnet, daß** der Rotor (2) ein zylindrischer Ringkörper ist.

## Claims

1. A brush seal with angled bristles for sealing a rotor (2) against a stator comprising a base plate (9) with a longitudinal section (10) and a base section (11) and bristles (3) having shaft sections (6) and bristle sections (7) angled in relation thereto, the ends of which run against the sealing surface of the rotor (2),
**characterised in that**
provided between the shaft sections (6) of the bristles (3) and the base plate (9) is a bending space (13) and provided between the angled brush sections (7) and the base section (11) of the base plate (9) along the entire length of said base section (11) is a gap (12) which closes in the event of a pressure differential.

2. A brush seal in accordance with claim 1,
**characterised in that**
the gap (12) is set such that in the event of a pressure differential there is no pressure load in the shaft sections (6) of the bristles (3).

3. A brush seal in accordance with claim 1 or 2,
**characterised in that**
the bending space (13) extends to the end edge (!4) of the longitudinal section (10) of the base plate (9).

4. A brush seal with angled bristles for sealing a rotor (2) against a stator comprising a base plate (9) with a longitudinal section (10) and a base section (11) and bristles (3) with shaft sections (6) and bristle sections (7) angled in relation thereto, the ends of which run against the sealing surface of the rotor (2),
**characterised in that**
the angled bristle sections (7) are set at an angle in the direction of the direction of rotation of the rotor.

5. A brush seal in accordance with claim 4,
**characterised in that**
the angle is between 0° and 70°.

6. A brush seal in accordance with claim 4 or 5,
**characterised in that**
provided between the shaft sections (6) of the bristles (3) and the base plate (9) is a bending space (13).

7. A brush seal in accordance with one or more of the preceding claims,
**characterised in that**
the shaft sections (6) of the bristles (3) are longer than the angled bristle sections (7).

8. A brush seal in accordance with one or more of the preceding claims,
**characterised in that**
the free ends of the bristles (3) form a seal against an internal rotor (2).

9. A brush seal in accordance with one or more of claims 1 to 7,
**characterised in that**
the free ends of the bristles (3) form a seal against an external rotor (2).

10. A brush seal in accordance with claim 9,
**characterised in that**
the rotor (2) is a cylindrical annular body.

## Revendications

1. Joint à brosse comprenant des poils coudés, servant à rendre étanche un rotor (2) par rapport à un stator, comprenant une plaque d'appui (9) comportant une partie longitudinale (10) et une partie d'appui (11), et des poils (3) comportant des parties (6) formant la tige et des parties de poils coudées (7) par rapport à ces parties formant la tige, parties de poils dont les extrémités s'appliquent contre la surface d'étanchéité du rotor (2),
**caractérisé**
**en ce qu'**il est prévu un espace libre de flexion (13) placé entre les parties (6) formant la tige des poils (3), et la plaque d'appui (9), et un intervalle (12) existe entre les parties de poils coudées (7) et la partie d'appui (11) de la plaque d'appui (9), lequel intervalle, qui s'étend sur toute la longueur de la partie d'appui, se ferme en cas de pression différentielle de contact.

2. Joint à brosse selon la revendication 1, **caractérisé en ce que** l'intervalle (12) est réglé de manière telle, qu'il n'y a aucune contrainte de pression dans les parties (6) formant la tige des poils (3), en cas de pression différentielle de contact.

3. Joint à brosse selon la revendication 1 ou 2, **caractérisé en ce que** l'espace libre de flexion (13) s'étend jusqu'au bord d'extrémité (14) de la partie longitudinale (10) de la plaque d'appui (9).

4. Joint à brosse comportant des poils coudés, servant à rendre étanche un rotor (2) par rapport à un stator, comprenant une plaque d'appui (9) comportant une partie longitudinale (10) et une partie d'appui (11), et des poils (3) comportant des parties (6) formant la tige et des parties de poils coudées (7) par rapport à ces parties formant la tige, parties de poils dont les extrémités s'appliquent contre la surface d'étanchéité du rotor (2), **caractérisé en ce que** les parties de poils coudées (7) sont réglées suivant un angle formé en direction du sens de rotation du rotor.

5. Joint à brosse selon la revendication 4, **caractérisé en ce que** l'angle est compris entre 0° et 70°.

6. Joint à brosse selon la revendication 4 ou 5, **caractérisé en ce qu'**il est prévu un espace libre de flexion (13) placé entre les parties (6) formant la tige des poils (3), et la plaque d'appui (9).

7. Joint à brosse selon l'une quelconque ou plusieurs des revendications précédentes, **caractérisé en ce que** les parties (6) formant la tige des poils (3) sont plus longues que les parties de poils coudées (7).

8. Joint à brosse selon l'une quelconque ou plusieurs des revendications précédentes, **caractérisé en ce que** les poils (3), par leurs extrémités libres, assurent l'étanchéité en s'appliquant contre un rotor (2) placé à l'intérieur.

9. Joint à brosse selon l'une quelconque ou plusieurs des revendications 1 à 7, **caractérisé en ce que** les poils (3), par leurs extrémités libres, assurent l'étanchéité en s'appliquant contre un rotor (2) placé à l'extérieur.

10. Joint à brosse selon la revendication 9, **caractérisé en ce que** le rotor (2) est un corps annulaire cylindrique.
